# EUROPÄISCHE PATENTSCHRIFT

(11) **EP 1 313 812 B1**
(45) Veröffentlichungstag und Bekanntmachung des Hinweises auf die Patenterteilung: **23.04.2008**
(21) Anmeldenummer: 01974213.9
(22) Anmeldetag: 28.08.2001
(51) Int. Cl.: C09C 3/08, C09J 201/00, C08G 18/10, C09J 175/00, C08K 3/00

(54) **REAKTIONSKLEBSTOFF MIT MINDESTENS EINER MIKROVERKAPSELTEN KOMPONENTE**
CHEMICALLY REACTIVE ADHESIVE COMPRISING AT LEAST ONE MICRO ENCAPSULATED COMPONENT
SUBSTANCE ADHESIVE REACTIONNELLE COMPRENANT AU MOINS UNE COMPOSANTE EN MICROCAPSULE

(30) Priorität: 01.09.2000 DE 10043082
(43) Veröffentlichungstag der Anmeldung: 28.05.2003
(73) Patentinhaber: Henkel Kommanditgesellschaft auf Aktien, 40589 Düsseldorf (DE)
(72) Erfinder: KIRSTEN, Christian, N., 40789 Monheim (DE); HENKE, Günter, 41470 Neuss (DE); MECKEL-JONAS, Claudia, 41468 Neuss (DE); UNGER, Lothar, 46049 Oberhausen (DE); MEIER, Frank, 40589 Düsseldorf (DE); SCHMIDT, Thorsten Jardim Aquarius, 12246-001 São José dos Campos - SP (BR)
(86) Internationale Anmeldenummer: PCT/EP2001/009871
(87) Internationale Veröffentlichungsnummer: WO 2002/018499

(56) Entgegenhaltungen:
- WO-A-00/34404
- WO-A-88/06165
- WO-A-94/04623
- US-A- 6 001 204
- SYNTHETIC METALS, Bd. 94, 1998, Seiten 99-104, XP000934280

## Beschreibung

Die Erfindung betrifft einen Reaktionsklebstoff mit mindestens einer mikroverkapselten Komponente, enthaltend mindestens ein Harz, mindestens einen Härter und mindestens ein Additiv, sowie dessen Herstellung und Verwendung.

Unter Reaktionsklebstoffen werden Klebstoffe verstanden, die über chemische Reaktionen (Polyreaktionen, Vernetzung) die durch Wärme, zugesetzte Härter oder andere Komponenten bzw. Strahlung ausgelöst werden können, aushärten und abbinden (Römpp Lexikon Chemie - Version 2.0, Stuttgart/New York: Georg Thieme Verlag 1999).

Reaktionsklebstoffe mit mindestens einer mikroverkapselten Komponente sind bekannt.

Die WO 88/06165 offenbart einen Einkomponenten Polyurethanklebstoff der ein blockiertes, durch erhitzen aktivierbares Vernetzungsmittel in mikroverkapselter Form enthält.

Die WO 97/25360 beschreibt beispielsweise einen 1-Komponenten-Polyurethan-Klebstoff, der sich im wesentlichen aus einem Polyurethan - Prepolymeren mit endständigen Isocyanat-Gruppen und einer mikroverkapselten Härterkomponente zusammensetzt. Als konkretes Anwendungsgebiet für das beschriebene Reaktionsklebstoff-System wird das Verkleben von Glasscheiben in der Automobilindustrie genannt. Als Vorteil des beschriebenen Reaktionsklebstoff Systems wird beispielsweise das Erzielen schnellerer "drive-away"-Zeiten genannt. Unter "drive-away" Zeit wird die Zeitspanne verstanden, die einerseits eine ordnungsgemäße Montage der Glasscheibe und andererseits das Erfüllen der Materialqualität- und Sicherheitsanforderungen erlaubt.

Die Freisetzung des mikroverkapselten Härters und damit die Aktivierung der Härtungsreaktion erfolgt, wie auf der Seite 19, Absatz 2, näher beschrieben ist, durch Zerstörung der Mikrokapsel. Die Zerstörung der Mikrokapsel kann während der Applikation des Reaktionsklebstoffes durch Wärme, Scherkräfte, Ultraschallwellen oder Mikrowellen erfolgen. In einer bevorzugten Ausführungsform wird die Mikrokapsel durch Scherung zerstört, indem der Reaktionsklebstoff durch ein Sieb gezwängt wird, welches an der engsten Stelle schmaler ist als die kleinsten Mikrokapseln. In dieser Ausführung ist es vorteilhaft, wenn dieses Sieb lange Schlitze besitzt, welche mit den breiten Öffnungen in Richtung des zu extrudierenden Reaktionsklebstoffes weisen, während die schmaleren Öffnungen in Richtung der Verteilungsdüse weisen. Die durchschnittliche Partikelgröße der Mikrokapseln liegt zwischen 10 bis 2100 Mikrometern, bevorzugt im Bereich von 1200 bis 1200 Mikrometern.
Nachteilig an dem beschriebenen System ist, dass bereits während des Appliziervorganges, d. h. im Auftragsgerät , die Polymerisationsreaktion ausgelöst wird. Beispielsweise ist das Zwischenlagern eines mit Reaktionsklebstoff beschichteten Substrats somit nicht mehr möglich. Durch das Auslösen der Polymerisationsreaktion im Auftragsgerät besteht ferner das Risiko, dass teil- oder ausgehärteter Klebstoff die schmalen Öffnungen des Auftragsgerätes verstopfen kann. Dies kann zu Produktionsstörungen führen.
Ausgehend von diesem Stand der Technik ergab sich die Aufgabe, einen Reaktionsklebstoff beziehungsweise ein Verfahren bereitzustellen, welcher mindestens eine mikroverkapselte Komponente enthält, die auf möglichst schonende Art und Weise für Klebstoff und Substrat zu einem beliebigen Zeitpunkt freigesetzt wird. Natürlich sollen die bisherigen positiven Verarbeitungs- und Gebrauchseigenschaften des Klebstoffes, insbesondere hohe Lagerstabilität und gute Maschinenlaufeigenschaften während der Verarbeitung, möglichst erhalten bleiben.
Die erfindungsgemäße Lösung dieser Aufgabe ist den Patentansprüchen zu entnehmen. Sie beruht im wesentlichen in der Bereitstellung eines Reaktionsklebstoffes mit mindestens einer mikroverkapselten Komponente, enthaltend mindestens ein Harz, mindestens einem Härter, mindestens einem Additiv sowie Nanopartikeln mit kristallinen Strukturen mit ferromagnetischen, ferrimagnetischen, superparamagnetischen oder piezoelektrischen Eigenschaften. Die Nanopartikel sind im Reaktionsklebstoff in einer Größenordung von 0,02 bis 5 Gew.-%, bevorzugt von 0,05 bis 2 Gew.-%, bezogen auf die Gesamtzusammensetzung des Reaktionsklebstoffes, enthalten.
"Nanopartikel" im Sinne der vorliegenden Erfindung sind dabei Teilchen mit kristallinen Strukturen mit einer durchschnittlichen Teilchengröße (bzw. einem durchschnittlichen Teilchendurchmesser) von nicht mehr als 200 nm, vorzugsweise nicht mehr als 50 nm und insbesondere nicht mehr als 30 nm. Vorzugsweise weisen die erfindungsgemäß einzusetzenden Nanopartikel eine durchschnittliche Teilchengröße im Bereich von 1 bis 40 nm, besonders bevorzugt zwischen 3 und 30 nm auf. Für die Ausnutzung der Effekte durch Superparamagnetismus sollen die Teilchengrößen nicht mehr als 30 nm betragen. Die Teilchen- bzw. Kristallitgröße wird dabei bevorzugt nach der UPA-Methode (Ultrafine Particle Analyzer) bestimmt, z. B. nach dem Laser-Streulicht-Verfahren ("laser light back scattering"). Um eine Agglomeration oder ein Zusammenwachsen der Nanopartikel zu verhindern oder zu vermeiden, sind diese üblicherweise oberflächenmodifiziert bzw. oberflächenbeschichtet. Ein derartiges Verfahren zur Herstellung agglomeratfreier Nanopartikel ist am Beispiel von Eisenoxidteilchen in der DE-A-196 14 136 in den Spalten 8 bis 10 angegeben: Einige Möglichkeiten zur oberflächlichen Beschichtung derartiger Nanopartikel zur Vermeidung einer Agglomeration sind in der DE-A-197 26 282 angegeben.
Die PCT/EP99/09303 beschreibt die Verwendung paramagnetischer oder ferromagnetischer Nanopartikel in Klebstoffen. Der Vorteil dieser Verwendung liegt in der besseren homogenen Verteilung der magnetischen Nanopartikel in der Klebstoffmatrix. Dies hilft beispielsweise bei der Aufarbeitung von Altpapier, mit Klebstoffresten kontaminiertes Papier mittels Anlegen eines magnetischen Feldes abzutrennen.
Die in der PCT/EP99/09303 beschriebenen Nanopartikel werden ausdrücklich auch zum Gegenstand der vorliegenden Anmeldung gemacht.

Die Nanopartikel weisen mindestens ein Element ausgewählt aus der Gruppe bestehend aus Al, Fe, Co, Ni, Cr, Mo, W, V, Nb, Ta, Ce, Pr, Nd, Pm, Sm, Eu, Gd, Tb, Dy, Ho, Er, Tm, Yb, Lu, Legierungen aus zwei oder mehr der genannten Elemente, Oxiden der genannten Elemente oder Ferriten der genannten Elemente auf.
Die PCT/EP00/04453 (unveröffentlicht) betrifft Klebstoffzusammensetzungen, deren Bindemittelsystem Nanopartikel mit ferromagnetischen, ferrimagnetischen, superparamagnetischen oder piezoelektrische Eigenschaften enthält.
Die Nanopartikel dienen als "Signal-Empfänger" elektrischer, magnetischer oder elektromagnetischer Wechselfelder und Erwärmen die Klebstoffschicht, in der sie sich befinden, unter dem Einfluß dieser Felder. Dies Erwärmung der Klebstoffschicht dient zur Trennung der Klebeverbunde.
Die in der PCT/EP00/04453 beschriebenen Nanopartikel, sowie das Verfahren zum Lösen von Klebeverbindungen mit Hilfe von elektrischen, magnetischen oder elektromagnetischen Wechselfeldern werden ausdrücklich zum Gegenstand der vorliegenden Anmeldung gemacht.
Ein weiterer Gegenstand der vorliegenden Erfindung ist daher die Verwendung des erfindungsgemäßen Reaktionsklebstoffes zur Freisetzung von mikroverkapselten Reaktionsklebstoff-Komponenten, in dem die Aktivierung des Klebstoffes nach Freisetzung mindestens einer mikroverkapselten Reaktionsklebstoff-Komponente durch Einwirkung elektrischer, magnetischer und/oder elektromagnetischer Wechselfelder gegebenenfalls in Kombination mit Druck Ultraschall und/oder Temperatur und in Gegenwart von Nanopartikeln erfolgt.
Hierzu enthält der Reaktionsklebstoff Nanopartikel, die unter Einfluß dieser Wechselfelder die notwendige Durchlässigkeit der Mikrokapsel für den Austritt der mikroverkapselten Komponenten ermöglichen. Die Nanopartikel können, sowohl direkter Bestandteil der Mikrokapsel sein, sich aber auch außerhalb der Mikrokapsel als Bestandteil der Klebstoffformulierung befinden.
Die Nanopartikel dienen als Reaktionsklebstoff-Komponente mit "Signalempfänger"-Eigenschaft, so dass Energie in Form von elektromagnetischen Wechselfeldern gezielt in den Reaktionsklebstoff und insbesondere in die Mikrokapsel eingetragen wird. Durch den Energieeintrag kommt es zu einer lokalen starken Temperaturerhöhung, wodurch ein Aufschmelzen, Aufquellen oder Aufbrechen der Mikrokapsel-Hülle direkt oder indirekt ermöglicht wird. Direkt bedeutet in diesem Zusammenhang, dass sich die Nanopartikel in oder auf der Mikrokapsel-Hülle befinden und durch thermische Interaktion direkt die Bestandteile der Mikrokapsel-Hülle beeinflussen. Indirekt bedeutet in diesem Zusammenhang, dass sich die Nanopartikel innerhalb der Mikrokapsel befinden, dort untereinander und/oder gegebenenfalls mit weiteren Bestandteilen des Kapselinhalts in thermische Interaktion treten, ein Aufquellen oder Aufschmelzen des Kapselinhalts bewirken und somit ein Aufbrechen der Mikrokapsel-Hülle hervorrufen.
Gegenüber den herkömmlichen Erwärmungsmethoden zeichnet sich das erfindungsgemäße Verfahren dadurch aus, dass die Wärmeerzeugung lokal definiert im Reaktionsklebstoff geschieht und dass eine thermische Belastung der zu verklebenden Substratmaterialien selbst vermieden bzw. minimiert wird. Das Verfahren ist sehr zeitsparend und effektiv, da die Wärme nicht durch Diffusionsvorgänge durch die zu verklebenden Substrate hindurch in die Reaktionsklebstoffschicht eingebracht werden muß. Dieses Verfahren reduziert auch in erheblichem Maße Wärmeverluste durch Wärmeableitung bzw. Wärmestrahlung über das Substrat, dadurch wird das erfindungsgemäße Verfahren besonders ökonomisch.

Zur Energieeintragung eignen sich elektrische, magnetische und/oder elektromagnetische Wechselfelder.
Bei der Anwendung elektrischer Wechselfelder sind Nanopartikel aus piezoelektrischen Stoffen geeignet, z. B. Quarz, Turmalin, Bariumtitanat, Lithiumsulfat, Kaliumtartrat, Natriumtartrat, Kalium-Natrium-tartrat, Ethylendiamintartrat, Ferroelektrika mit Perowskitstruktur und vor allem Blei-Zirkonium-Titanat.
Bei der Verwendung von magnetischen Wechselfeldern eignen sich grundsätzlich alle Nanopartikel aus ferrimagnetischen, ferromagnetischen oder superparamagnetischen Stoffe, insbesondere die Metalle Aluminium, Kobalt, Eisen, Nickel oder deren Legierungen sowie Metalloxide vom Typ n-Maghemit (γ-Fe₂O₃), n-Magnetit (Fe₃O₄), Ferrite von der allgemeinen Formel MeFe₂O₄, wobei Me für zweiwertige Metalle aus der Gruppe Kupfer, Zink, Kobalt, Nickel, Magnesium, Calcium oder Cadmium steht.
Bei der Verwendung magnetischer Wechselfelder eignen sich insbesondere superparamagnetische Nanopartikel, sogenannte "single-domain-particle". Im Vergleich zu den vom Stand der Technik bekannten paramagnetischen Partikeln zeichnen sich die Nanopartikel dadurch aus, dass solche Materialien keine Hysterese aufweisen. Dies hat zur Folge, dass die Energiedissipation nicht durch magnetische Hystereseverluste hervorgerufen wird, sondern die Wärmeerzeugung vielmehr auf eine während der Einwirkung eines elektromagnetischen Wechselfeldes induzierte Schwingung oder Rotation der Teilchen, oder Rotationsbewegung der magnetischen Dipolmomente der magnetischen Partikel in der umgebenden Matrix und somit letztlich auf mechanische Reibungsverluste zurückzuführen ist. Dies führt zu einer besonders effektiven Erwärmungsrate der Teilchen und der sie umgebenden Matrix.

Die Herstellung von Magnetit- oder Maghemit-Nanopartikeln läßt sich beispielsweise durch Einsatz einer Mikroemulsionstechnologie erreichen. Hierbei wird die disperse Phase einer Mikroemulsion zur Größenbegrenzung der gebildeten Partikel eingesetzt. In einer W/O-Mikroemulsion wird ein metallhaltiges Reagenz in der dispersen wässrigen Phase gelöst. Das Reagenz wird anschließend in der dispersen Phase zu einer Vorstufe der gewünschten magnetischen Verbindung umgesetzt, die daraufhin bereits die gewünschte Größe im Nanometerbereich aufweist. Anschließend wird mit einem vorsichtigen Oxidationsschritt das Metalloxid, insbesondere Eisenoxid in Form von Magnetit oder Maghemit, hergestellt. Ein entsprechendes Verfahren ist beispielsweise in der US-A 5 695 901 beschrieben.

Neben den beschriebenen Nanopartikeln eignen sich als weitere Komponenten für den erfindungsgemäßen Reaktionsklebstoff prinzipiell die bekannten Reaktionsklebstoff-Komponenten, wie beispielsweise bei G. Habenicht, "Kleben: Grundlagen, Technologie, Anwendungen", 3. Auflage, 1997 im Kapitel 2 beschrieben.
So werden beispielsweise als Harze Polymere aus Epoxiden, Polyisocyanaten, . Cyanacrylaten, Methacrylaten, ungesättigten Polyestern, Polyvinylformialen, Phenol-Formaldehyd-Harzen, Harnstoff-Formaldeyd-Harzen, Melamin-Formaldeyd-Harzen, Resorcin-Formaldeydharzen Polybenzimidazolen, Silikonen, silanmodifizierten Poylmeren; oder ein Gemisch aus zwei oder mehr davon, verwendet.
Ebenso finden Härter aus der Gruppe katalytisch wirkender Verbindungen wie Peroxide, Chlorwasserstoff und/oder nach dem Polyadditionsmechanismus reagierende Verbindungen mit Amino-, Hydroxy-, Epoxy-, Isocyanat - Funktionalitäten, Carbonsäureanhydride; oder ein Gemisch aus zwei oder mehr, Verwendung.
Mindestens ein Additiv aus der Gruppe der Katalysatoren, Antioxidantien, Stabilisatoren, Farbstoffpigmente, Duftstoffe, Konservierungsmittel; oder ein Gemisch aus zwei oder mehr dieser Additive kann Bestandteil des erfindungsgemäßen Reaktionsklebstoffes sein.

Eine besondere Ausführung des erfindungsgemäßen Reaktionsklebstoffes ist ein Polyurethan - Reaktionsklebstoff auf Basis eines Polyurethan - Prepolymeren. Unter einem Polyurethan - Prepolymeren wird im Rahmen des vorliegenden Textes eine Verbindung verstanden, wie sie sich beispielsweise aus der Umsetzung einer Polyolkomponente mit mindestens einem mindestens difunktionellen Isocyanat ergibt.
Die Umsetzung kann dabei in Substanz oder in einem Lösungsmittel, beispielsweise Essigsäureethylester, Aceton oder Methylethylketon erfolgen.
Der Begriff "Polyurethan - Prepolymeres" umfasst, sowohl Verbindungen mit relativ niedrigem Molekulargewicht, wie sie beispielsweise aus der Umsetzung eines Polyols mit einem Überschuss an Polyisocyanat entstehen, es werden jedoch auch oligomere oder polymere Verbindungen mit umfasst.

Auf polymere Verbindungen bezogene Molekulargewichtsangaben beziehen sich, soweit nichts anderes angegeben ist, auf das Zahlenmittel des Molekulargewichts (Mn).
In der Regel weisen die im Rahmen der vorliegenden Erfindung eingesetzten Polyurethan - Prepolymeren ein Molekulargewicht von 500 bis 27 000, bevorzugt 700 bis 15 000, besonders bevorzugt 700 bis 8 000 g/mol.
Ebenso vom Begriff "Polyurethan - Prepolymere" umschlossen sind Verbindungen, wie sie z.B. aus der Umsetzung eines 3- oder 4-wertigen Polyols mit einem molaren Überschuß an Diisocyanaten, bezogen auf das Polyol, gebildet werden. In diesem Fall trägt ein Molekül der resultierenden Verbindung mehrere Isocyanatgruppen.
Polyurethan - Prepolymere mit Isocyanat-Endgruppen sind seit langem bekannt. Sie können mit geeigneten Härtern - meist polyfunktionellen Alkoholen - in einfacher Weise zu hochmolekularen Stoffen kettenverlängert oder vernetzt werden.
Um Polyurethan - Prepolymere mit endständigen Isocyanatgruppen zu erhalten, ist es üblich, polyfunktionelle Alkohole mit einem Überschuß an Polyisocyanaten, in der Regel wenigstens überwiegend Diisocyanate, zur Reaktion zu bringen. Hierbei läßt sich das Molekulargewicht wenigstens näherungsweise über das Verhältnis von OH-Gruppen zu Isocyanatgruppen steuern. Während ein Verhältnis von OH-Gruppen zu Isocyanatgruppen von 1 : 1 oder nahe 1 : 1 oft zu harten, gegebenenfalls spröden Molekülen mit hohen Molekulargewichten führt, wird beispielsweise bei einem Verhältnis von etwa 2 : 1 bei der Verwendung von Diisocyanaten im statistischen Mittel an jede OH-Gruppe ein Diisocyanatmolekül angehängt, so dass es im Verlauf der Reaktion im Idealfall nicht zu Oligomerbildung bzw. Kettenverlängerung kommt.
Polyurethan-Prepolymere werden üblicherweise durch Umsetzung von mindestens einem Polyisocyanat, vorzugsweise einem Diisocyanat, und mindestens einer Komponente mit gegenüber Isocyanatgruppen reaktionsfähigen funktionellen Gruppen, in der Regel einer Polyolkomponente, die vorzugsweise aus Diolen besteht, hergestellt. Die Polyolkomponente kann dabei nur ein Polyol enthalten, es kann jedoch auch ein Gemisch aus zwei oder mehreren Polyolen als Polyolkomponente eingesetzt werden. Unter einem Polyol wird ein polyfunktioneller Alkohol verstanden, d.h. eine Verbindung mit mehr als einer OH-Gruppe im Molekül.

Unter "gegenüber Isocyanatgruppen reaktionsfähigen funktionellen Gruppen" werden im Rahmen des vorliegenden Textes funktionelle Gruppen verstanden, die mit Isocyanatgruppen unter Ausbildung mindestens einer kovalenten Bindung reagieren können.
Geeignete reaktionsfähige funktionelle Gruppen können im Sinne einer Reaktion mit Isocyanaten monofunktionell sein, beispielsweise OH-Gruppen oder Mercaptogruppen. Sie können jedoch auch gegenüber Isocyanaten difunktionell sein, beispielsweise Aminogruppen. Ein Molekül mit einer Aminogruppe weist demnach auch zwei gegenüber Isocyanatgruppen reaktionsfähige funktionelle Gruppen auf. Es ist in diesem Zusammenhang nicht notwendig, dass ein einziges Molekül zwei getrennte, gegenüber Isocyanatgruppen reaktionsfähige funktionelle Gruppen aufweist. Entscheidend ist, dass das Molekül mit zwei Isocyanatgruppen unter Ausbildung jeweils einer kovalenten Bindung eine Verbindung eingehen kann.

Als Polyolkomponente kann eine Vielzahl von Polyolen eingesetzt werden. Beispielsweise sind dies aliphatische Alkohole mit 2 bis 4 OH-Gruppen pro Molekül. Die OH-Gruppen können sowohl primär als auch sekundär sein. Zu den geeigneten aliphatischen Alkoholen zählen beispielsweise Ethylenglykol, Propylenglykol, Butandiol-1,4, Pentandiol-1,5, Hexandiol-1,6, Heptandiol-1,7, Octandiol-1,8 und deren höhere Homologen oder Isomeren, wie sie sich für den Fachmann aus einer schrittweisen Verlängerung der Kohlenwasserstoffkette um jeweils eine CH₂-Gruppe oder unter Einführung von Verzweigungen in die Kohlenstoffkette ergeben. Ebenfalls geeignet sind höherfunktionelle Alkohole wie beispielsweise Glyzerin, Trimethylolpropan, Pentaerythrit sowie oligomere Ether der genannten Substanzen mit sich selbst oder im Gemisch aus zwei oder mehr der genannten Ether untereinander.
Weiterhin können als Polyolkomponente Umsetzungsprodukte niedermolekularer polyfunktioneller Alkohole mit Alkylenoxiden, sogenannte Polyether, eingesetzt werden. Die Alkylenoxide weisen vorzugsweise 2 bis 4 C-Atome auf. Geeignet sind beispielsweise die Umsetzungsprodukte von Ethylenglykol, Propylenglykol, den isomeren Butandiolen, Hexandiolen oder 4,4'-Dihydroxy-diphenylpropan mit Ethylenoxid, Propylenoxid oder Butylenoxid, oder Gemischen aus zwei oder mehr davon Ferner sind auch die Umsetzungsprodukte polyfuntioneller Alkohole, wie Glyzerin, Trimethylolethan oder Trimethylolpropan, Pentaerythrit oder Zuckeralkohole, oder Gemischen aus zwei oder mehr davon, mit den genannten Alkylenoxiden zu Polyetherpolyolen geeignet. Besonders geeignet sind Polyetherpolyole mit einem Molekulargewicht von etwa 100 bis etwa 10.000, vorzugsweise von etwa 200 bis etwa 5.000.
Ebenfalls als Polyolkomponente sind Polyetherpolyole geeignet, wie sie beispielsweise aus der Polymerisation von Tetrahydrofuran entstehen.

Die Polyether werden in dem Fachmann bekannter Weise durch Umsetzung der Startverbindung mit einem reaktiven Wasserstoffatom mit Alkylenoxiden, beispielsweise Ethylenoxid, Propylenoxid, Butylenoxid, Styroloxid, Tetrahydrofuran oder Epichlorhydrin oder Gemischen aus zwei oder mehr davon, umgesetzt.
Geeignete Startverbindungen sind beispielsweise Wasser, Ethylenglykol, Propylenglykol-1,2 oder -1,3, Butylenglykol-1,4 oder -1,3 Hexandiol-1,6, Octandiol-1,8, Neopentylglykol, 1,4-Hydroxymethylcyclohexan, 2-Methyl-1,3-propandiol, Glyzerin, Trimethylolpropan, Hexantriol-1,2,6, Butantriol-1,2,4 Trimethylolethan, Pentaerythrit, Mannitol, Sorbitol, Methylglykoside, Zucker, Phenol, Isononylphenol, Resorcin, Hydrochinon, 1,2,2- oder 1,1,2-Tris-(hydroxyphenyl)-ethan, Ammoniak, Methylamin, Ethylendiamin, Tetra- oder Hexamethylenamin, Triethanolamin, Anilin, Phenylendiamin, 2,4- und 2,6-Diaminotoluol und Polyphenylpolymethylenpolyamine, wie sie sich durch Anilin-Formaldehydkondensation erhalten lassen, oder Gemische aus zwei oder mehr davon.

Ebenfalls zum Einsatz als Polyolkomponente geeignet sind Polyether, die durch Vinylpolymere modifiziert wurden. Derartige Produkte sind beispielsweise erhältlich, indem Styrol- oder Acrylnitril, oder deren Gemisch, in der Gegenwart von Polyethern polymerisiert werden.
Ebenfalls als Polyolkomponente sind Polyesterpolyole mit einem Molekulargewicht von etwa 200 bis etwa 10.000 geeignet. So können beispielsweise Polyesterpolyole verwendet werden, die durch Umsetzung von niedermolekularen Alkoholen, insbesondere von Ethylenglykol, Diethylenglykol, Neopentylglykol, Hexandiol, Butandiol, Propylenglykol, Glyzerin oder Trimethylolpropan mit Caprolacton entstehen. Ebenfalls als polyfunktionelle Alkohole zur Herstellung von Polyesterpolyolen geeignet sind 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind durch Polykondensation herstellbar So können difunktionelle und/oder trifunktionelle Alkohole mit einem Unterschuß an Dicarbonsäuren und/oder Tricarbonsäuren, oder deren reaktiven Derivaten, zu Polyesterpolyolen kondensiert werden. Geeignete Dicarbonsäuren sind beispielsweise Adipinsäure oder Bernsteinsäure und ihre höhere Homologen mit bis zu 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Die genannten Säuren können einzeln oder als Gemische aus zwei oder mehr davon eingesetzt werden. Im Rahmen der Erfindung besonders geeignet sind Polyesterpolyole aus mindestens einer der genannten Dicarbonsäuren und Glycerin, welche einen Restgehalt an OH-Gruppen aufweisen. Besonders geeignete Alkohole sind Hexandiol, Ethylenglykol, Diethylenglykol oder Neopentylglykol oder Gemische aus zwei oder mehr davon. Besonders geeignete Säuren sind Isophthalsäure oder Adipinsäure oder deren Gemisch.

Polyesterpolyole mit hohem Molekulargewicht umfassen beispielsweise die Umsetzungsprodukte von polyfunktionellen, vorzugsweise difunktionellen Alkoholen (gegebenenfalls zusammen mit geringen Mengen an trifunktionellen Alkoholen) und polyfunktionellen, vorzugsweise difunktionellen Carbonsäuren. Anstatt freier Polycarbonsäuren können (wenn möglich) auch die entsprechenden Polycarbonsäureanhydride oder entsprechende Polycarbonsäureester mit Alkoholen mit vorzugsweise 1 bis 3 C-Atomen eingesetzt werden. Die Polycarbonsäuren können aliphatisch, cykloaliphatisch, aromatisch oder heterocyklisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet. Gegebenenfalls können untergeordnete Mengen an monofunktionellen Fettsäuren im Reaktionsgemisch vorhanden sein.
Die Polyester können gegebenenfalls einen geringen Anteil an Carboxylendgruppen aufweisen. Aus Lactonen, beispielsweise ε-Caprolacton oder Hydroxycarbonsäuren, beispielsweise ω-Hydroxycapronsäure, erhältliche Polyester, können ebenfalls eingesetzt werden.
Ebenfalls als Polyolkomponente geeignet sind Polyacetale. Unter Polyacetalen werden Verbindungen verstanden, wie sie aus Glykolen, beispielsweise Diethylenglykol oder Hexandiol oder deren Gemisch mit Formaldehyd erhältlich sind. Im Rahmen der Erfindung einsetzbare Polyacetale können ebenfalls durch die Polymerisation cyklischer Acetale erhalten werden.

Weiterhin als Polyole geeignet sind Polycarbonate. Polycarbonate können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat, oder Phosgen, erhalten werden.

Ebenfalls als Polyolkomponente geeignet, OH-Gruppen tragende Polyacrylate. Diese Polyacrylate sind beispielsweise erhältlich durch die Polymerisation von ethylenisch ungesättigten Monomeren, die eine OH-Gruppe tragen. Solche Monomeren sind beispielsweise durch die Veresterung von ethylenisch ungesättigten Carbonsäuren und difunktionellen Alkoholen, wobei der Alkohol in der Regel in einem leichten Überschuß vorliegt, erhältlich. Hierzu geeignete ethylenisch ungesättigte Carbonsäuren sind beispielsweise Acrylsäure, Methacrylsäure, Crotonsäure oder Maleinsäure. Entsprechende OH-Gruppen tragende Ester sind beispielsweise 2-Hydroxyethylacrylat, 2-Hydroxyethylmethacrylat, 2-Hydroxypropylacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.

Neben den Diolen der Polyolkomponente sind Diisocyanate wesentliche Bausteine des als Reaktionsklebstoff-Komponente einsetzbaren Polyurethans. Dabei handelt es sich um Verbindungen der allgemeinen Struktur O=C=N-X-N=C=O, wobei X ein alipathischer, alicyclischer oder aromatischer Rest ist, vorzugsweise ein aliphatischer oder alicyclischer Rest mit 4 bis 18 C-Atomen.

Beispielsweise seien als geeignete Isocyanate 1,5-Naphthylendiisocyanat, 4,4'-Diphenylmethandiisocyanat (MDI), hydriertes MDI (H₁₂MDI), Xylylendiisocyanat (XDI), Tetramethylxylylendiisocyanat (TMXDI), 4,4'-Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Di-isocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-düsocyanat, Ethylen-diisocyanat, Phthalsäure-bis-isocyanato-ethylester, ferner Diisocyanate mit reaktionsfähigen Halogenatomen, wie 1-Chlormethylphenyl-2,4-düsocyanat, 1-Brommethylphenyl-2,6-diisocyanat,3,3-Bis-chlormethylether-4,4'-diphenyldiisocyanat genannt.

Schwefelhaltige Polyisocyanate erhält man beispielsweise durch Umsetzung von 2 mol Hexamethylendiisocyanat mit 1 mol Thiodiglykol oder Dihydroxydihexylsulfid. Weitere einsetzbare Diisocyanate sind beispielsweise Trimethylhexamethylendiisocyanat, 1,4-Diisocyanatobutan, 1,12-Diisocyanatododecan und Dimerfettsäurediisocyanat. Besonders geeignet sind: Tetramethylen-, Hexamethylen, Undecan-, Dodecamethylen-, 2,2,4-Trimethylhexan-, 1,3-Cyclohexan-, 1,4-Cyclohexan-, 1,3- bzw. 1,4-Tetramethylxylol-, Isophoron-, 4,4-Dicyclohexylmethan- und Lysinesterdiisocyanat. Ganz besonders bevorzugt ist das Tetramethylxylylendüsocyanat (fMXDI), insbesondere das m-TMXDI von der Fa. Cyanamid.
Als mindestens trifunktionelle Isocyanate geeignet sind beispielsweise die Tri- und Oligomerisierungsprodukte der bereits oben erwähnten Polyisocyanate, wie sie unter Bildung von Isocyanuratringen durch geeignete Umsetzung von Polyisocyanaten, vorzugsweise von Diisocyanaten, erhältlich sind. Werden Oligomerisierungsprodukte eingesetzt, so eignen sich insbesondere diejenigen Oligomerisierungsprodukte mit einem Oligomerisierungsgrad von durchschnittlich etwa 3 bis etwa 5.

Zur Herstellung von Trimeren geeignete Isocyanate sind die bereits oben genannten Diisocyanate, wobei die Trimerisierungsprodukte der Isocyanate HDI, MDI oder IPDI besonders bevorzugt sind.

Ebenfalls zum Einsatz geeignet sind die polymeren isocyanate, wie sie beispielsweise als Rückstand im Destillationssumpf bei der Destillation von Diisocyanaten anfallen. Besonders geeignet ist hierbei das polymere MDI, wie es bei der Destillation von MDI aus dem Destillationsrückstand erhältlich ist.

Die Polyurethan-Prepolymeren können mit geeigneten Härtern, meist polyfunktionellen Alkoholen oder Aminen, aber auch Wasser, in einfacher Weise zu hochmolekularen Stoffen kettenverlängert oder vernetzt werden.
Hierzu werden zunächst Prepolymere mit überschüssigem Diisocyanat hergestellt, die dann anschließend mit meist kurzkettigen polyfunktionellen Alkoholen und/oder Aminen und/oder Wasser verlängert werden.

Als Härter seien konkret genannt:
- gesättigte und ungesättigte Glykole wie Ethylenglykol oder Kondensate des Ethylenglykols, Butandiol-1,3, Butandiol-1,4, 2-Buten-1,4-diol, 2-Butin-1,4-diol, Propandiol-1,2, Propandiol-1,3, Neopentylglykol, Hexandiol, Bishydroxymethylcyclohexan, Dioxyethoxyhydrochinon, Terephthalsäurebisglykolester, Bernsteinsäure-di-2-hydroxyethylamid, Bemsteinsäuredi-N-methyl-(2-hydroxyethyl)amid, 1,4-Di(2-hydroxymethylmercapto)-2,3,5,6-tetrachlorbenzol, 2-Methylen-propandiol-(1,3), 2-Methylpropandiol-(1,3), 3-Pyrrolidino-1,2-propandiol, 2-Methylenpentandiol-2,4, 3-Alkoxy-1,2-propandiol, 2-Ethylhexan-1,3-diol, 2,2-Dimethylpropandiol-1,3, 1,5-Pentandiol, 2,5-Dimethyl-2,5-hexandiol, 3-Phenoxy-1,2-propandiol, 3-Benzyloxy-1,2-propandiol, 2,3-Dimethyl-2,3-butandiol, 3-(4-Methoxyphenoxy)-1,2-propandiol und Hydroxymethylbenzylalkohol;
- aliphatische, cycloaliphatische und aromatische Diamine wie Ethylendiamin, Hexamethylendiamin, 1,4-Cyclohexylendiamin, Piperazin, N-Methylpropylendiamin, Diaminodiphenylsulfon, Diaminodiphenylether, Diaminodiphenyldimethylmethan, 2,4-Diamino-6-phenyltriazin, Isophorondiamin, Dimerfettsäurediamin, Diaminodiphenylmethan, Aminodiphenylamin oder die Isomeren des Phenylendiamins;
- weiterhin auch Carbohydrazide oder Hydrazide von Dicarbonsäuren;
- Aminoalkohole wie Ethanolamin, Propanolamin, Butanolamin, N-Methylethanolamin, N-Methyl-isopropanolamin, Diethanolamin, Triethanolamin sowie höhere Di- oder Tri(alkanolamine);
- aliphatische, cycloaliphatische, aromatische und heterocyklische Mono- und Diaminocarbonsäuren wie Glycin, 1- und 2-Alanin, 6-Aminocapronsäure, 4-Aminobuttersäure, die isomeren Mono- und Diaminobenzoesäuren sowie die isomeren Mono- und Diaminonaphthoesäuren.

Die Aushärtzeit kann durch Anwesenheit von Katalysatoren verkürzt werden.
Insbesondere sind tertiäre Amine geeignet, z.B. Triethylamin, Triethanolamin, Triisopropanolamin, 1,4-Diazabicyclo[2,2,2]octan (= DABCO) Dimethylbenzylamin, Bis-dimethylaminoethylether und Bis-Methylaminomethylphenol. Besonders geeignet sind 1-Methyl-imidazol, 2-Methyl-1-vinylimidazol, 1-Allylimidazol, 1-Phenylimidazol, 1,2,4,5-Tetramethylimidazol, 1-(3-Aminopropyl)imidazol, Pyrimidazol, 4-Dimethylamino-pyridin, 4-Pyrrofidinopyridin, 4-Morpholino-pyridin, 4-Methylpyridin.

Es können auch zinnorganische Verbindungen als Katalysatoren eingesetzt werden. Darunter werden Verbindungen verstanden, die sowohl Zinn als auch einen organischen Rest enthalten, insbesondere Verbindungen, die eine oder mehrere Sn-C-Bindungen enthalten. Zu den zinnorganischen Verbindungen im weiteren Sinne zählen z.B. Salze wie Zinnoctoat und Zinnstearat. Zu den Zinnverbindungen im engeren Sinne gehören vor allem Verbindungen des vierwertigen Zinns der allgemeinen Formel Rₙ₊₁SnX₃₋ₙ, wobei n für eine Zahl von 0 bis 2 steht, R für eine Alkylgruppe oder eine Arylgruppe oder beides steht und X schließlich für eine Sauerstoff-, Schwefel- oder Stickstoff-Verbindung oder ein Gemisch aus zwei oder mehr davon steht. Zweckmäßigerweise enthält R mindestens 4 C-Atome, insbesondere mindestens 8. Die Obergrenze liegt in der Regel bei 12 C-Atomen. Vorzugsweise ist X eine Sauerstoffverbindung, also ein zinnorganische Oxid, Hydroxid, Carboxylat oder ein Ester einer anorganischen Säure. X kann aber auch eine Schwefelverbindung sein, also ein zinnorganisches Sulfid, Thiolat oder ein Thiosäureester. Bei den Sn-S-Verbindungen sind vor allem Thioglykolsäureester geeignet, z.B. Verbindungen mit folgenden Resten:

-S-CH₂-CH₂-CO-O-(CH₂)₁₀-CH₃

oder

-S-CH₂-CH₂-CO-O-CH₂-CH(C₂H₅)-CH₂-CH₂-CH₂-CH₃.

Eine weitere bevorzugte Verbindungsklasse stellen die Dialkyl-Zinn-(IV)-Carboxylate dar (X=O-CO-R¹). Die Carbonsäuren haben 2, vorzugsweise wenigstens 10, insbesondere 14 bis 32 C-Atome. Es können auch Dicarbonsäuren eingesetzt werden. Als Säuren sind beispielsweise Adipinsäure, Maleinsäure, Fumarsäure, Terephthalsäure, Phenylessigsäure, Benzoesäure, Essigsäure, Propionsäure sowie insbesondere Capryl-, Caprin-, Laurin-, Myristin-, Palmitin- und Stearinsäure geeignet. Besonders geeignet sind beispielsweise Dibutylzinn-diacetat und -dilaurat sowie Dioctylzinn-diacetat und -dilaurat.

Auch Zinnoxide und -sulfide, sowie -thiolate sind im Rahmen der vorliegenden Erfindung geeignet. Konkrete Verbindungen sind: Bis(tributylzinn)oxid, Dibutylzinndidodecylthiolat, Dioctylzinndioctylhiolat, Dibutylzinn-bis(thioglykolsäure-2-ethyl-hexylester), Octylzinn-tris-(thioglykolsäure-2-ethyl-hexylester), Dioctylzinn-bis(thioethylenglykol-2-ethylhexoat), Dibutylzinn-bis(thioethylenglykollaurat), Dibutylzinnsulfid, Dioctylzinnsulfid, Bis(tributylzinn)sulfid, Dibutylzinn-bis(thioglykolsäure-2-ethylhexylester), Dioctylzinn-bis(thioethylenglykol-2-ethylhexoat), Trioctylzinnthioethylenglykol-2-ethylhexoat sowie Dioctylzinn-bis(thiolatoessigsäure-2-ethylyhexylester), Bis(S,S-methoxycarbonyl ethyl)zinn-bis(thiolatoessigsäure-2-ethylhexylester), Bis(S,S-acetyl-ethyl)zinn-bis(thiolatoessigsäure-2-ethyl-hexylester), Zinn(II)octylhiolat und Zinn(II)-thioethylenglykol-2-ethylhexoat.

Außerdem seien noch genannt: Dibutylzinndiethylat, Dihexylzinndihexylat, Dibutylzinndiacetylacetonat, Dibutylzinndiethylacetylacetat, Bis(butyldichlorzinn)oxid, Bis(dibutylchlorzinn)sulfid, Zinn(11)phenolat, Zinn(II)-acetylacetonat, sowie weitere α-Dicarbonylverbindungen wie Acetylaceton, Dibenzoylmethan, Benzoylaceton, Acetessigsäureethylester, Acetessigsäure-n-propylester, α,α'-Diphenylacetessigsäureethylester und Dehydroacetessigsäure.

Gegebenenfalls kann die erfindungsgemäße Polyurethanzusammensetzung neben eines Katalysators noch weitere Zusatzstoffe enthalten. Die Zusatzstoffe können an der gesamten Zusammensetzung einen Anteil von bis zu etwa 10 Gew.-% aufweisen.

Zu den im Rahmen der vorliegenden Erfindung einsetzbaren Zusatzstoffen zählen Katalysatoren, Weichmacher, Stabilisatoren, Antioxidantien, Farbstoffe, Photostabilisatoren, Füllstoffe, Farbstoffpigmente, Duftstoffe, Konservierungsmittel oder Gemische daraus.

Als Weichmacher werden beispielsweise Weichmacher auf Basis von Phthalsäure eingesetzt, insbesondere Dialkylphthalate, wobei als Weichmacher Phthalsäureester bevorzugt sind, die mit einem etwa 6 bis etwa 12 Kohlenstoffatomen aufweisenden, linearen Alkanol verestert wurden. Besonders bevorzugt ist hierbei das Dioctylphthalat.
Ebenfalls als Weichmacher geeignet sind Benzoatweichmacher, beispielsweise Sucrosebenzoat, Diethylenglykoldibenzoat und/oder Diethylenglykolbenzoat, bei dem etwa 50 bis etwa 95% aller Hydroxylgruppen verestert worden sind, Phosphat-Weichmacher, beispielsweise t-Butylphenyldiphenylphosphat, Polyethylenglykole und deren Derivate, beispielsweise Diphenylether von Poly(ethylenglykol), flüssige Harzderivate, beispielsweise der Methylester von hydriertem Harz, pflanzliche und tierische Öle, beispielsweise Glycerinester von Fettsäuren und deren Polymerisationsprodukte.

Zu den im Rahmen der Erfindung als Zusatzstoffe einsetzbaren Stabilisatoren oder Antioxidantien, zählen gehinderte Phenole hohen Molekulargewichts (Mₙ), polyfunktionelle Phenole und schwefel- und phosphorhaltige Phenole. Im Rahmen der Erfindung als Zusatzstoffe einsetzbare Phenole sind beispielsweise 1,3,5-Trimethyl-2,4,6-tris(3,5-di-tert-butyl-4-hydroxybenzyl)benzol; Pentaerythrittetrakis-3-(3,5-di-tert-butyl-4-hydroxyphenyl)propionat; n-Octa-decyl-3,5-di-tert-butyl-4-hydroxyphenyl)propionat; 4,4-Methyfenbis(2,6-di-tert-butyl-phenol); 4,4-Thiobis(6-tert-butyl-o-cresol); 2,6-Di-tert-butylphenol; 6-(4-Hydroxyphenoxy)-2,4-bis(n-octyl-thio)-1,3,5-triazin; Di-n-Octadecyl-3,5-di-tert-butyl-4-hydroxybenzylphosphonate; 2-(n-Octylthio)ethyl-3,5-di-tert-butyl-4-hydroxybenzoat; und Sorbithexa[3-(3,5-di-tert-butyl-4-hydroxyphenyl)propionat].

Als Photostabilisatoren sind beispielsweise diejenigen geeignet, die unter dem Namen Thinuvin® (Hersteller: Ciba Geigy) im Handel erhältlich sind.

Die Herstellung des Polyurethan-Prepolymeren erfolgt nach einem dem Fachmann bekannten Verfahren, in der Regel unter Ausschluß von Feuchtigkeit und in einer Schutzgasatmosphäre. Beispielsweise wird die Polyolkomponente, gegebenenfalls zusammen mit einem geeigneten Lösungsmittel, in einem geeigneten Gefäß vorgelegt und gemischt. Anschließend erfolgt unter Fortsetzung des Mischens die Zugabe der mindestens difunktionellen Isocyanatkomponente. Zur Beschleunigung der Reaktion wird üblicherweise die Temperatur auf 40 °C bis 80 °C erhöht. Meist sorgt die einsetzende, exotherme Reaktion für ein weiteres Ansteigen der Temperatur. Die Temperatur des Ansatzes wird bei etwa 70 °C bis 110 °C gehalten. Gegebenenfalls können zur Beschleunigung der Reaktion in der Polyurethanchemie übliche Katalysatoren, bevorzugt Dibutlyzinndilaurat oder Diazabicyclooctan (DABCO), zugegeben werden. Wenn ein Katalysatoreinsatz gewünscht ist, wird der Katalysator in der Regel in einer Menge von etwa 0,005 Gew.-% bis etwa 0,5 Gew.-%, bezogen auf den Ansatz, dem Reaktionsgemisch zugegeben. Die Reaktionsdauer hängt von Art und Menge der eingesetzten Edukte, der Reaktionstemperatur sowie vom gegebenenfalls vorhandenen Katalysator ab. Üblicherweise beträgt die Gesamtreaktionsdauer etwa 30 Minuten bis etwa 20 Stunden.

Der zum Reaktivklebstoff-System gehörende Härter und gegebenenfalls weitere Additive werden in einem dem Fachmann bekannten Mikroverkapselungsverfahren, beispielsweise Koazervation, Grenzflächenpolymerisation, Sprühtrocknung, Tauch- oder Zentrifugenverfahren, Mehrstoffdüsen, Wirbelbett, Elektrostatische Mikroverkapselung, Vakuum-Verkapselung, unterzogen und isoliert. Bevorzugt werden die Mikrokapseln nach dem Sprühtrocknungsverfahren hergestellt, grundsätzlich sind hier alle dem Fachmann bekannten Sprühtrocknungsverfahren geeignet. Bei einem Sprühtrocknungsverfahren wird die wässrige Lösung oder Dispersion, welche die Bestandteile der Mikrokapsel enthält, zusammen mit einem heißen Luftstrom versprüht, wobei die wässrige Phase bzw. alle im Luftstrom flüchtigen Bestandteile verdampfen.

Die zu verkapselnden Reaktionsklebstoff-Komponenten können beispielsweise, wie unter US Patent 3,389,194 beschrieben, hergestellt werden. Ebenso können Techniken zur Mikroverkapselung von magnetischen Teilchen und Polymere zur Herstellung der Mikrokapseln verwendet werden, wie sie in der WO 99/59556 näher beschrieben sind.
Die Nanopartikel können Bestandteil der Mikrokapselhülle sein und/oder sich im Inneren der Mikrokapsel befinden.

In einer besonderen Ausführungsform der Erfindung werden vor dem Sprühtrocknungsverfahren noch weitere Nanopartikel zugegeben. Beispielsweise werden der wässrigen Lösung oder Dispersion, welche die Bestandteile der Mikrokapseln enthält, 20 %, bevorzugt 10 % Nanopartikel, bezogen auf die Masse an Mikrokapseln, zugegeben. Durch das folgende Sprühtrocknungsverfahren werden die Nanopartikel statistisch in der Mikrokapselhülle eingebaut bzw. außen angelagert.

Eine bevorzugte Ausführungsform der vorliegenden Erfindung ist ein Reaktionsklebstoff mit Mikrokapseln, wobei sowohl Härter als auch Nanopartikel und gegebenenfalls weitere Komponenten mikroverkapselt sind.
Die Mikrokapseln haben die Funktion eines latenten Härtersystems. Auf Kommando, das heißt durch Anlegen elektrischer, magnetischer und/ oder elektromagnetischer Wechselfelder , gegebenenfalls in Kombination mit Druck, Ultraschall und/oder Temperatur, erwärmen sich selektiv zuerst die Nanopartikel. Die Nanopartikel bewirken durch Energie-Übertragung ein Aufschmelzen, Aufquellen oder Aufbrechen der Mikrokapsel-Hülle in einem Maße, dass Härter und ggf. weitere Additive in die umgebende Reaktionsklebstoffmatrix freigesetzt werden. Wie bereits beschrieben, kann die Energie-Übertragung direkt auf die Bestandteile der Mikrokapsel-Hülle erfolgen und dort ein Aufschmelzen, Aufquellen oder Aufbrechen der Mikrokapsel-Hülle bewirken. Es kann auch primär eine Energie-Übertragung der Nanopartikel auf den Mikrokapsel-Inhalt erfolgen, wodurch beispielsweise ein Aufquellen des Mikrokapsel-Inhalts einsetzt und beispielsweise ein Aufbrechen der Mikrokapsel-Hülle bewirkt.
Durch die Freisetzung des Härters und gegebenenfalls weiterer Additive, bevorzugt Katalysatoren, beginnt der Aushärtprozess bis hin zu den gewünschten End-Eigenschaften des Klebstoffes.

Die Mikrokapseln haben eine Partikelgröße von 100 Nanometern bis 800 Mikrometer, bevorzugt 0,1 bis 100 Mikrometer und besonders bevorzugt 0,5 bis 60 Mikrometer. In einer weiteren besonderen Ausführungsform haben die Mikrokapseln eine Partikelgröße von 0,1 bis 10 Mikrometer, insbesondere als Reaktionsklebstoff-Komponente in Kaschierklebstoffen. Die Größe und Konzentration der Mikrokapseln ist so bemessen, dass sowohl ein effektives Öffnen der Mikrokapsel stattfinden kann als auch nach Aushärtung des Klebstoffes eine ausreichende Festigkeit für die gewünschte Anwendung erzielt wird. Die Größe und Konzentration der Mikrokapsel muß aber auch so bemessen sein, dass die zur Verkapselung verwendeten und im Klebstoffsystem verbleibenden Polymeren keine negative Auswirkungen auf die Adhäsions- und Kohäsionseigenschaften des Klebstoffes ausüben.
Zum Verkapseln der Reaktionsklebstoff-Komponenten kommen Polymere in Betracht, die unlöslich in der zu verkapselnden Reaktionsklebstoff-Komponente sind. Die Polymeren haben bevorzugt einen Schmelzpunkt von 40 °C bis 200 °C. Ferner haben die Polymeren bevorzugt filmbildende Eigenschaften. Geeignete Polymere sind beispielsweise:
Kohlenwasserstoff-Wachse, Wachsester, Polyethylenwachse, oxidierte Kohlenwasserstoff-Wachse mit Hydroxyl- oder Carboxylgruppen, Polyester, Polyamide, oder Mischungen aus zwei oder mehr davon.
Besonders bevorzugt werden zur Herstellung der Mikrokapsel-Hülle wasserlösliche oder zumindest wasserdispergierbare Polymere, insbesondere aber natürliche oder synthetische Polyanionen, wie sie von A. Prokop, D. Hunkeler et al. in Advances in Polymer Science, 136 (1998), in Tabelle 2 auf Seite 5-7 aufgeführt sind, eingesetzt.

Die Mikrokapseln sind in einer Menge von 0,2 bis 20 Gew.-%, vorzugsweise in einer Menge von 0,2 bis 10 Gew.-%, bezogen auf die Gesamtzusammensetzung des Reaktionsklebstoffes, im Reaktionsklebstoff enthalten.
In einer bevorzugten Ausführung sind die Nanopartikel Bestandteil der Mikrokapsel. Der Anteil der Nanopartikel an der Mikrokapsel beträgt 0,05 bis 20 Gew.-%, bevorzugt 0,05 bis 10 Gew.-%.
Neben Nanopartikeln können weitere Reaktionsklebstoff-Komponenten Bestandteil der Mikrokapsel sein. Die Gesamtkonzentration der Reaktionsklebstoff-Komponenten beträgt in diesem Fall 1 bis 90 Gew.-%, bevorzugt 5 bis 70 Gew.-%, bezogen auf das Gesamtgewicht der Mikrokapsel.
In einer weiteren bevorzugten Ausführungsform sind Nanopartikel und Härter Bestandteil der Mikrokapsel. Die Konzentration des in der Mikrokapsel befindlichen Härters oder Härtergemisches beträgt zwischen 1 bis 90 Gew.-%, bevorzugt 50 bis 80 Gew.-% bezogen auf das Gesamtgewicht der Mikrokapsel.
Die mikroverkapselten Nanopartikel und Härter können in Klebstoffen, Dichtstoffen, Lacken und Formkörpern verwendet werden. Hierzu werden bevorzugt feste Härter mit den entsprechenden Nanopartikeln in einem gewichtsmäßigen Anteil von 0,5:1 bis 20:1, bevorzugt 1:1 bis 15:1 und insbesondere bevorzugt von 5:1 bis 12:1 vermischt. Die Mischung wird bei Temperaturen von 60°-140° Celsius aufgeschmolzen. Die Schmelze wird unter Rühren in organische Lösungsmittel, bevorzugt unpolare organische Lösungsmittel, eingetragen. Anschließend wird das entstehende Pulver mittels einer gängigen Labormethode vom Lösungsmittel getrennt und getrocknet. Das getrocknete Pulver wird mittels mechanischer Hilfsmittel, beispielsweise Mörser, auf eine Partikelgröße von 1 - 20 µ, bevorzugt 3 - 15 µ und insbesondere bevorzugt 5 - 10 µ zerkleinert. Die resultierende Partikelgröße und -verteilung wird mittels eines Lichtmikroskops bestimmt. Das zerkleinerte Pulver wird in Wasser dispergiert und ggf. auf einen pH-Wert von 3 - 6 eingestellt. Zu der Dispersion wird bevorzugt bei Raumtemperatur eine Lösung oder Dispersion des filmbildenden Polymers der Dispersion zugegeben und nachgerührt. Nach Aufkonzentration wird die entstehende wässrige Lösung oder Dispersion, welche die Bestandteile der Mikrokapseln enthält, zusammen mit einem heißen Luftstrom versprüht, wobei die wässrige Phase, bzw. alle im Luftstrom flüchtigen Bestandteile verdampfen.

Der Katalysator wird vorzugsweise dem Härter zugesetzt. Seine Menge richtet sich nach seiner Aktivität und den Reaktionsbedingungen. Sie liegt vorzugsweise im Bereich von 0,001 bis 0,5 Gew.-%, bezogen auf den Härter.

Der erfindungsgemäße Reaktionsklebstoff enthält
A) 50 bis 95 Gew.-% mindestens eines NCO-terminierten Polyurethan-Prepolymeren,
B) 0,2 bis 20 Gew.-% Mikrokapseln, enthaltend mindestens einen Härter sowie Nanopartikel mit ferromagnetischen, ferrimagnetischen, superparamagnetischen oder piezoelektrischen Eigenschaften,
C) 0 bis 20 Gew.-% mindestens eines Härters
D) 0,05 bis 30 Gew.-% Zusatzstoffe
bezogen auf die Gesamtzusammensetzung des Klebstoffes.

Eine besondere Ausführungsform ist ein Reaktionsklebstoff,enthaltend :
A) mindestens einem NCO-terminierten Polyester-Polyurethan,
B) Mikrokapseln, enthaltend mindestens einen Härter auf Basis eines aromatischen Diamins sowie Nanopartikel mit ferromagnetischen, ferrimagnetischen, superparamagnetischen oder piezoelektrischen Eigenschaften
   sowie
C) mindestens einem Härter aus der Gruppe der Polyole.

Der Reaktionsklebstoff kann als sogenannter 1-Komponenten-(1 K)-Klebstoff formuliert werden. Das heißt, Mikrokapseln, die den Härter und gegebenenfalls noch weitere Reaktionsklebstoff-Komponenten enthalten, werden mit dem Harz, bestehend aus dem Polyurethan - Prepolymeren und gegebenenfalls weiteren Reaktionsklebstoff-Komponenten, direkt nach Herstellung miteinander vermischt. Meist enthalten diese 1 K-Klebstoffe noch Lösungsmittel.
Der Reaktionsklebstoff kann auch als sogenannter 2-Komponenten-(2K)-Klebstoff hergestellt werden. Das heißt, Mikrokapseln, die den Härter und gegebenenfalls noch weitere Reaktionsklebstoff-Komponenten enthalten, werden mit dem Harz, bestehend aus dem Polyurethan - Prepolymeren und gegebenenfalls weiteren Reaktionsklebstoff-Komponenten, erst unmittelbar vor der Anwendung miteinander vermischt. Die Mischung kann beispielsweise in einem Statikmischer erfolgen und über ein Dosiersystem dem Auftragssystem zugeführt werden.

Die erfindungsgemäße Reaktionsklebstoffzusammensetzung wird bevorzugt als Klebstoff zum Kaschieren und Lamenieren verwendet und zeichnet sich bei der Verarbeitung durch hohe Reaktivität und kurze Aushärtungszeiten aus.
Die erfindungsgemäße Reaktionsklebstoffzusammensetzung verfügt über lange Lagerzeiten bezüglich der Mischung der Prepolymeren - Komponente mit Mikrokapseln und deren Bestandteilen, sowie der Härter-Komponente mit Mikrokapseln und deren Bestandteilen. Trotz verkürzter Aushärtungszeit wird die für die Verarbeitung notwendige Topfzeit beibehalten beziehungsweise kann deutlich verlängert werden. Unter Topfzeit versteht man nach DIN 16920 die Zeitspanne, in der ein Ansatz eines Reaktionsklebstoffes nach dem Mischen aller Klebstoffkomponenten für eine bestimmte Verwendung brauchbar ist. Die Topfzeit ist abhängig von der Zusammensetzung des Reaktionsklebstoffes und den äußeren Gegebenheiten, wie beispielsweise der Art der Anlage, der Umgebungstemperatur, der Luftfeuchtigkeit. Enthält die erfindungsgemäße Reaktionsklebstoff-Zusammensetzung noch Lösungsmittel, beträgt die Topfzeiten acht bis 30 Stunden. Ist die erfindungsgemäße Reaktionsklebstoffzusammensetzung frei von Lösungsmittel, beträgt die Topfzeit 0,5 bis 30 Stunden.
Der maßgebliche Vorteil in der Anwendung des erfindungsgemäßen Reaktionsklebstoffes liegt in der Aktivierung des Klebeprozesses zu einem individuell gewünschten und beliebigen Zeitpunkt durch Freisetzung mindestens einer mikroverkapselten Reaktionsklebstoff-Komponente durch Einwirkung elektrischer, magnetischer und/oder elektromagnetischer Wechselfelder gegebenenfalls in Kombination mit Druck Ultraschall und/oder Temperatur und in Gegenwart von Nanopartikeln.

Als Energie zur Aktivierung der Nanopartikel - enthaltenden Reaktionsklebstoffe mit mindestens einer mikroverkapselten Komponente eignet sich prinzipiell jedes höherfrequente elektromagnetische Wechselfeld: so lassen sich beispielsweise elektromagnetische Strahlungen der sog. ISM-Bereiche (industrial, scientific and medical application) einsetzen, nähere Angaben hierzu finden sich unter anderem bei Kirk-Othmer, "Encyclopedia of Chemical Technology", 3. Auflage, Band 15, Kapitel "Microwave technology".
Zur Aktivierung der Nanopartikel kann bereits im sehr niederfrequenten Bereich von etwa 50 kHz oder 100 kHz bis hinauf zu 100 MHz nahezu jede Frequenz verwendet werden, um ein Aufschmelzen, Aufquellen oder Aufbrechen der Mikrokapsel zu erreichen. Die Auswahl der Frequenz kann sich dabei nach den zur Verfügung stehenden Geräten richten, wobei selbstverständlich dafür Sorge getragen werden muß, dass Störfelder nicht abgestrahlt werden.

Nachfolgend soll die Erfindung anhand eines Prinzipversuches dargestellt werden, wobei die Auswahl des Beispieles keine Beschränkung des Umfanges des Erfindungsgegenstandes darstellen soll. Es zeigt nur in modellhafter Weise die Wir kungsweise der erfindungsgemäßen Klebstoffzusammensetzung.

### Beispiele:

### 1. Ausgangsstoffe zur Herstellung der Reaktionklebstoffe

1. Liofol UK 3640 (Prepolymer auf Basis MDI und Polyester) der Fa. Henkel KGaA
2. Liofol UK 6000 (Härter auf Polyolbasis) der Fa. Henkel KGaA
3. ADPA (Aminodiphenylamin, Härter) der Fa. Merck, Darmstadt
4. Bayferrox 318 M (Magnetit, oberflächenmodifizierte Nanopartikel (PAS)) der Fa. Bayer AG.
5. PSS (Poly-(Natriumstyrolsulfonat)) mit einer molaren Masse von ca. 70000 oder 1 000 000 g/mol der Fa. Aldrich
6. Mowiol 23-88 (Polyvinylalkohol) mit einer molaren Masse von ca.150 000 g/mol der Fa. Clariant

### II. Herstellung der Reaktionsklebstoffe

### 1. Mikroverkapselung

Aminodiphenylamin wird mit Magnetit in einem gewichtsmäßigen Anteil von 9 : 1 vermischt und bei 100 °C im Trockenschrank aufgeschmolzen. Die Schmelze wird unter kräftigem Rühren in Cyclohexan eingetragen. Das entstehende Pulver wird mittels Vakuumfiltration vom Cyclohexan getrennt und im Trockenschrank bei 25 °C getrocknet. Im Anschluß bringt man das getrocknete Pulver durch mörsern und mahlen auf eine Partikelgröße von weniger als 10 µ. Die resultierende Partikelgröße und Verteilung wird mittels eines Lichtmikroskop bestimmt.
22 g des zermahlenen Produktes werden in 180 g demin. Wasser dispergiert und mit 3,75 g Salzsäure (32 Gew.-%ig) versetzt.
Die Nanopartikel haben in diesem Stadium eine durchschnittliche Partikelgröße von ca. 30 nm, bestimmt mit einem N4-Nanosizer
Zu der Dispersion wird bei Raumtemperatur eine Lösung von 6,65 g Poly-(Natriumstyrolsulfonat) in 60 g Wasser über einen Zeitraum von 2 Stunden zugetropft, anschließend wird 5 Stunden nachgerührt (Ausbeute: 98% d. th. A.).
Die Dispersion wird bei 40°C auf ein Volumen von 75 ml aufkonzentriert und mit 60 ml Mowiol 23-88, 4 Gew.-% bezogen auf die aufkonzentrierte Dispersion, versetzt und in der Sprühtrocknung getrocknet.

### 2. Sprühtrocknung

Die Parameter an der Sprühtrocknung werden wie folgt gewählt: Sprühflow 800 1/h N2, Aspiratorleistung 20 w.E., Temperatureingang: 145 °C, Temperaturausgang: 87 °C. Die Mikrokapseln fallen in Ausbeuten von ca. 20-40 % als leicht gefärbtes Produkt mit einer bevorzugten Partikelgröße von 1-25 µ an. Durch ein nachfolgendes Siebverfahren werden Partikelgrößen von 1 bis 10 µ erhalten (Siebfraktionen: 100, 50, 25, 10, 5 µ).

### 3. Reaktionsklebstoff

Die gesiebten Mikrokapseln werden mit dem Polyolhärter (Liofol UK 6000) in einem Gewichtsmengenverhältnis von 1 : 1 gemischt. Diese Mischung wird anschließend mit dem Prepolymeren Liofol UK 3640 in einem Gewichtsmengenverhältnis von 1 : 50 gemischt.

### 4. Referenzsystem

Als Referenzsysteme wurden gewählt:
a) eine Mischung aus Liofol UK 6000 mit Liofol UK 3640 im Gewichtsmengenverhältnis von 1 : 50 und
b) eine Mischung analog dem Verfahren und der Stöchiometrie des Systems, wie es unter den Punkten 1 bis 3 beschrieben ist mit der Ausnahme, das die Mikrokapseln nur Aminodiphenylamin, aber kein Magnetit enthalten.

### III. Anwendung der Reaktionsklebstoffe

Mit den unter (3.) und (4.) beschriebenen Reaktionsklebstoffen wurden verschieden Folienverbunde (OPP/PE; OPP/OPP; OPA/PE; PET/PE) im Handkaschierverfahren trocken hergestellt. Das Auftragsgewicht betrug für den jeweiligen Verbund 4-8 g/m² oder 2-3 g/m², je nach geeigneter Schichtdicke.
Anschließend wurden die Klebeverbunde in ein elektromagnetisches Wechselfeld eingebracht. Die Haftung dieser Proben 4 Stunden nach der Kaschierung und Bestrahlung war deutlich erhöht gegenüber den Referenzsystemen. Die vollständige Aushärtung bzw. Endfestigkeit wurde deutlich schneller erreicht.

### IV. Meßmethoden und Geräte

### Teilchengrößenbestimmuna:

Die Bestimmung der Partikelgröße erfolgte mit dem Gerät "Microtac® UPA150" der Fa. Honeywell und Sympatec Helos Vectra

### Sprühtrocknung:

Zur Sprühtrocknung des Härters sowie der Nanopartikel wurde das Gerät "Mini-Spray B-191" der Fa. Büchi Labortechnik (Flawil, CH) verwendet.

### Sieben:

Für das Sieben der sprühgetrockneten Mikrokapseln wurde das Gerät "Model L3P Sonic Sifter Separator" der Fa. ATM Corporation (Milwaukee, USA) eingesetzt, ausgestattet mit einem Mikro-Präzisionssieb für Partikel mit einem Durchmesser von 100 oder 50, 25, 10 und 5 µ.

### Kaschierung:

Die Handkaschierung wurde mit einem Rakel der Firma RD Specialties Inc., Webster, NY, wire size 10 und 5 µ, durchgeführt.

### Elektromagnetisches Wechselfeld:

Zur Erzeugung des benötigten magnetischen Wechselfeldes wurde ein Gerät der Fa. Hüttinger mit der Bezeichnung "Hochfrequenzgenerator 1997, Typ 1 G 5/3000", verwendet, ausgerüstet mit einer 3-windige Kupferspule (D= 5 mm). Die Frequenz: betrug 1,8 MHz.

## Patentansprüche

1. Reaktionsklebstoff mit mindestens einer mikroverkapselten Komponente, enthaltend mindestens ein Harz, mindestens einen Härter und mindestens ein Additiv, **dadurch gekennzeichnet, dass** Nanopartikel mit kristallinen Strukturen mit ferromagnetischen, ferrimagnetischen, superparamagnetischen oder piezoelektrischen Eigenschaften enthalten sind.

2. Reaktionsklebstoff nach Anspruch 1, **dadurch gekennzeichnet, dass** die durchschnittliche Teilchengröße der Nanopartikel im Bereich von 1 bis 200 nm liegt.

3. Reaktionsklebstoff nach Anspruch 1 oder 2, **dadurch gekennzeichnet, dass** die Nanopartikel mindestens ein Element ausgewählt aus der Gruppe bestehend aus Al, Fe, Co, Ni, Cr, Mo, W, V, Nb, Ta, Ce, Pr, Nd, Pm, Sm, Eu, Gd, Tb, Dy, Ho, Er, Tm, Yb, Lu, Legierungen aus zwei oder mehr der genannten Elemente, Oxiden der genannten Elemente oder Ferriten der genannten Elemente, bevorzugt Metalloxiden vom Typ des n-Maghemits (γ-Fe₂O₃), n-Magnetits (Fe₃O₄) oder der Ferrite vom Typ des MeFe₂O₄, wobei Me ein zweiwertiges Metall ausgewählt aus Mangan, Kupfer, Zink, Cobalt, Nickel, Magnesium, Calcium, Cadmium ist, enthalten.

4. Reaktionsklebstoff nach Anspruch 1 oder 2, **dadurch gekennzeichnet, dass** die Nanopartikel aus piezoelektrischen Stoffen ausgewählt aus Quarz, Turmalin, Bariumtitanat, Lithiumsulfat, Kaliumtartrat, Natriumtartrat, Kalium-Natrium-tartrat, Ethylendiamintartrat, ferroelektrischen Verbindungen mit Perowskitstruktur oder Blei-Zirkonium-Titanat aufgebaut sind.

5. Reaktionsklebstoff nach mindestens einem der Ansprüche 1 bis 4, **dadurch gekennzeichnet, dass** er Nanopartikel in einer Größenordung von 0,02 bis 5 Gew.-%, bezogen auf die Gesamtzusammensetzung des Reaktionsklebstoffes, enthält.

6. Reaktionsklebstoff nach Anspruch 1, **dadurch gekennzeichnet, dass** als Harz ein Polymer ausgewählt aus der Gruppe bestehend aus Epoxiden, Polyisocyanaten, Cyanacrylaten, Methacrylaten, ungesättigten Polyestern, Polyvinylformiale, Phenol-Formaldehyd-Harzen, Harnstoff Formaldeyd-Harzen, Melamin-Formaldeyd-Harzen, Resorcin-Formaldeydharzen Polybenzimidazole; oder ein Gemisch aus zwei oder mehr davon, enthalten ist.

7. Reaktionsklebstoff nach Anspruch 1, **dadurch gekennzeichnet, dass** er Härter aus der Gruppe katalytisch wirkender Verbindungen wie Peroxide, Chlorwasserstoff und/oder nach dem Polyadditionsmechanismus reagierende Verbindungen mit Amino-, Hydroxy-, Epoxy- Isocyanat Funktionalitäten, Carbonsäureanhydride; oder ein Gemisch aus aus zwei oder mehr dieser Härter enthält.

8. Reaktionsklebstoff nach Anspruch 1, **dadurch gekennzeichnet, dass** er mindestens ein Additiv aus der Gruppe der Weichmacher, Stabilisatoren, Antioxidantien, Farbstoffe, Photostabilisatoren, Füllstoffe, Farbstoffpigmente, Duftstoffe, Konservierungsmittel, enthält.

9. Reaktionsklebstoff nach Anspruch 1, **dadurch gekennzeichnet, dass** die Hülle der Mikrokapsel mindestens einen thermoplastischen Stoff aus der Gruppe der Kohlenwasserstoff-Wachse, Wachsester, Polyethylenwachse, oxidierte Kohlenwasserstoff-Wachse mit Hydroxyl- oder Carboxylgruppen, Polyester, Polyamide enthält.

10. Reaktionsklebstoff nach Anspruch 1, **dadurch gekennzeichnet, dass** die Hülle der Mikrokapsel mindestens ein wasserlösliches oder zumindest wasserdispergierbares Polymeres aus der Gruppe der natürlichen und/oder synthetischen Polyanionen enthält.

11. Reaktionsklebstoff nach mindestens einem der Ansprüche 1 bis 10, **dadurch gekennzeichnet, dass** die Mikrokapseln eine durchschnittliche Partikelgröße von 0,1 Mikrometer bis 800 Mikrometer haben.

12. Reaktionsklebstoff, nach mindestens einem der Ansprüche 1 bis 11, **dadurch gekennzeichnet, dass** er Mikrokapseln in einer Menge von 0,2 bis 20 Gew.-%, bezogen auf die Gesamtzusammensetzung des Reaktionsklebstoffes, enthält.

13. Reaktionsklebstoff nach mindestens einem der Ansprüche 1 bis 12, **dadurch gekennzeichnet, dass** die Konzentration der als Bestandteil der Mikrokapsel enthaltenen Nanopartikel 0,05 bis 20 Gew-%, bezogen auf das Gesamtgewicht der Mikrokapsel, beträgt.

14. Reaktionsklebstoff nach mindestens einem der Ansprüche 1 bis 13, **dadurch gekennzeichnet, dass** neben Nanopartikeln mindestens noch eine weitere Reaktionsklebstoff-Komponente Bestandteil der Mikrokapsel ist und die Gesamt-Konzentration der Reaktionsklebstoff-Komponenten 1 bis 90 Gew-%, bezogen auf die Gesamtzusammensetzung der Mikrokapsel, beträgt.

15. Reaktionsklebstoff nach mindestens einem der Ansprüche 1 bis 13, **dadurch gekennzeichnet, dass** die Konzentration der als Bestandteil der Mikrokapsel enthaltenenen Nanopartikel und mindestens eines Härters zwischen 1 bis 90 Gew.-%, bezogen auf die Gesamtzusammensetzung der Mikrokapsel, beträgt.

16. Reaktionsklebstoff nach mindestens einem der Ansprüche 1 bis 15, enthaltend:
A) 50 bis 95 Gew.-% mindestens eines NCO-terminierten Polyurethan-Prepolymeren,
B) 0,2 bis 20 Gew.-% Mikrokapseln, enthaltend mindestens einen Härter sowie Nanopartikel mit ferromagnetischen, ferrimagnetischen, superparamagnetischen oder piezoelektrischen Eigenschaften,
C) 0 bis 20 Gew.-% mindestens eines Härters II
D) 0,05 bis 30 Gew.-% Zusatzstoffe
bezogen auf die Gesamtzusammmensetzung des Reaktionsklebstoffes, wobei Härter I und Härter II gleicher oder unterschiedlicher chemischer Natur sein können.

17. Reaktionsklebstoff nach Anspruch 16, enthaltend:
A) mindestens ein NCO-terminiertes Polyester-Polyurethan,
B) Mikrokapseln, enthaltend mindestens einen Härter auf Basis eines aromatischen Diamins sowie Nanopartikel mit ferromagnetischen, ferrimagnetischen, superparamagnetischen oder piezoelektrischen Eigenschaften sowie
C) mindestens einen Härter aus der Gruppe der Polyole.

18. Verfahren zur Herstellung eines Reaktionsklebstoffes nach mindestens einem der Ansprüche 1 bis 17, **dadurch gekennzeichnet, dass**
(I) Mikrokapseln, die den Härter und gegebenenfalls noch weitere Reaktionsklebstoff-Komponenten enthalten, mit dem Harz und gegebenenfalls weiteren Reaktionsklebstoff-Komponenten, direkt nach Herstellung miteinander vermischt werden
oder
(II) Mikrokapseln, die den Härter und gegebenenfalls noch weitere Reaktionsklebstoff-Komponenten enthalten, mit dem Harz und gegebenenfalls weiteren Reaktionsklebstoff-Komponenten, erst unmittelbar vor der Anwendung miteinander vermischt werden.

19. Verwendung eines nach Anspruch 18 hergestellten Reaktionsklebstoffes zur Freisetzung von mikroverkapselten Reaktionsklebstoff-Komponenten, **dadurch gekennzeichnet, dass** die Aktivierung des Klebstoffes nach Freisetzung mindestens einer mikroverkapselten Reaktionsklebstoff-Komponente durch Einwirkung elektrischer, magnetischer und/oder elektromagnetischer Wechselfelder gegebenenfalls in Kombination mit Druck Ultraschall und/oder Temperatur und in Gegenwart von Nanopartikeln erfolgt.

20. Verwendung eines Reaktionsklebstoffes nach mindestens einem der Ansprüche 1 bis 17 als Klebstoff zum Kaschieren und Lamenieren.

## Claims

1. Reaction adhesive with at least one microencapsulated component comprising at least one resin, at least one curing agent, and at least one additive, **characterized in that** nanoparticles having crystalline structures with ferromagnetic, ferrimagnetic, superparamagnetic or piezoelectric properties are present.

2. Reaction adhesive according to Claim 1, **characterized in that** the average size of the nanoparticles is situated in the range from 1 to 200 nm.

3. Reaction adhesive according to Claim 1 or 2, **characterized in that** the nanoparticles comprise at least one element selected from the group consisting of Al, Fe, Co, Ni, Cr, Mo, W, V, Nb, Ta, Ce, Pr, Nd, Pm, Sm, Eu, Gd, Tb, Dy, Ho, Er, Tm, Yb, Lu, alloys of two or more of said elements, oxides of said elements or ferrites of said elements, preferably metal oxides of the type of n-maghemite (γ-Fe₂0₃) , n-magnetite (Fe₃0₄) or the ferrites of the type of MeFe₂O₄ where Me is a divalent metal selected from manganese, copper, zinc, cobalt, nickel, magnesium, calcium, and cadmium.

4. Reaction adhesive according to Claim 1 or 2, **characterized in that** the nanoparticles are composed of piezoelectric substances selected from quartz, tourmaline, barium titanate, lithium sulfate, potassium tartrate, sodium tartrate, potassium sodium tartrate, ethylenediamine tartrate, ferroelectric compounds having perovskite structure or lead zirconium titanate.

5. Reaction adhesive according to at least one of Claims 1 to 4, **characterized in that** it comprises nanoparticles in an order of magnitude from 0.02 to 5% by weight, based on the overall composition of the reaction adhesive.

6. Reaction adhesive according to Claim 1, **characterized in that** as resin a polymer selected from the group consisting of epoxides, polyisocyanates, cyanoacrylates, methacrylates, unsaturated polyesters, polyvinylformals, phenolformaldehyde resins, urea-formaldehyde resins, melamine-formaldehyde resins, resorcinol formaldehyde resins, and polybenzimidazoles; or a mixture of two or more thereof is present.

7. Reaction adhesive according to Claim 1, **characterized in that** it comprises curing agents from the group of catalytically active compounds such as peroxides, hydrogen chloride and/or compounds which react in accordance with the polyaddition mechanism and contain amino, hydroxyl, epoxy isocyanate functionalities, carboxylic anhydrides; or a mixture of two or more of these curing agents.

8. Reaction adhesive according to Claim 1, **characterized in that** it comprises at least one additive from the group of plasticizers, stabilizers, antioxidants, dyes, light stabilizers, fillers, dye pigments, fragrances, and preservatives.

9. Reaction adhesive according to Claim 1, **characterized in that** the shell of the microcapsule comprises at least one thermoplastic substance from the group of hydrocarbon waxes, wax esters, polyethylene waxes, oxidized hydrocarbon waxes containing hydroxyl or carboxyl groups, polyesters, and polyamides.

10. Reaction adhesive according to Claim 1, **characterized in that** the shell of the microcapsule comprises at least one water-soluble or at least water-dispersible polymer from the group of natural and/or synthetic polyanions.

11. Reaction adhesive according to at least one of Claims 1 to 10, **characterized in that** the microcapsules have an average particle size of from 0.1 micrometer to 800 micrometers.

12. Reaction adhesive according to at least one of Claims 1 to 11, **characterized in that** it comprises microcapsules in an amount of from 0.2 to 20% by weight, based on the overall composition of the reaction adhesive.

13. Reaction adhesive according to at least one of Claims 1 to 12, **characterized in that** the concentration of the nanoparticles present as part of the microcapsule is from 0.05 to 20% by weight, based on the total weight of the microcapsule.

14. Reaction adhesive according to at least one of Claims 1 to 13, **characterized in that** in addition to nanoparticles at least one further reaction adhesive component is part of the microcapsule and the overall concentration of the reaction adhesive components is from 1 to 90% by weight, based on the overall composition of the microcapsule.

15. Reaction adhesive according to at least one of Claims 1 to 13, **characterized in that** the concentration of the nanoparticles present as part of the microcapsule and of at least one curing agent is between 1 and 90% by weight, based on the overall composition of the microcapsule.

16. Reaction adhesive according to at least one of Claims 1 to 15, comprising:
A) from 50 to 95% by weight of at least one NCO-terminated polyurethane prepolymer,
B) from 0.2 to 20% by weight of microcapsules comprising at least one curing agent I and also nanoparticles having ferromagnetic, ferrimagnetic, superparamagnetic or piezoelectric properties,
C) from 0 to 20% by weight of at least one curing agent II
D) from 0.05 to 30% by weight of additives based on the overall composition of the reaction adhesive, it being possible for curing agent I and curing agent II to be identical or different in chemical nature.

17. Reaction adhesive according to Claim 16, comprising:
A) at least one NCO-terminated polyester polyurethane,
B) microcapsules comprising at least one curing agent based on an aromatic diamine and also nanoparticles having ferromagnetic, ferrimagnetic, superparamagnetic or piezoelectric properties and
C) at least one curing agent from the group of the polyols.

18. Process for preparing a reaction adhesive according to at least one of Claims 1 to 17, **characterized in that**
(I) microcapsules comprising the curing agent and, where appropriate, further reaction adhesive components are mixed with one another with the resin and, where appropriate, further reaction adhesive components directly after preparation
or
(II) microcapsules comprising the curing agent and, where appropriate, further reaction adhesive components are mixed with one another with the resin and, where appropriate, further reaction adhesive components not until immediately before application.

19. Use of a reaction adhesive prepared according to Claim 18 for releasing microencapsulated reaction adhesive components, **characterized in that** the activation of the adhesive following release of at least one microencapsulated reaction adhesive component takes place by exposure to electrical, magnetic and/or electromagnetic alternating fields in combination where appropriate with pressure, ultrasound and/or temperature and in the presence of nanoparticles.

20. Use of a reaction adhesive according to at least one of Claims 1 to 17 as an adhesive for laminating.

## Revendications

1. Substance adhésive réactionnelle comportant au moins une composante en microencapsule, contenant au moins une résine, au moins un durcisseur et au moins un additif, **caractérisée en ce qu'**elle contient des nanoparticules à structure cristalline ayant des propriétés ferromagnétiques, ferrimagnétiques, superparamagnétiques ou piézoélectriques.

2. Substance adhésive réactionnelle selon la revendication 1, **caractérisée en ce que** la taille particulaire moyenne des nanoparticules se situe dans un intervalle allant de 1 à 200 nm.

3. Substance adhésive réactionnelle selon la revendication 1 ou 2, **caractérisée en ce que** les nanoparticules contiennent au moins un élément choisi dans le groupe constitué par Al, Fe, Co, Ni, Cr, Mo, W, V, Nb, Ta, Ce, Pr, Nd, Pm, Sm, Eu, Gd, Tb, Dy, Ho, Er, Tm, Yb, Lu, les alliages de deux ou plusieurs des éléments mentionnés, les oxydes des éléments mentionnés ou les ferrites des éléments mentionnés, de préférence les oxydes métalliques du type de la n-maghémite (y-Fe₂O₃), de la n-magnétite (Fe₃O₄) ou des ferrites du type de MeFe₂O₄ , où Me est un métal bivalent choisi parmi le manganèse, le cuivre, le zinc, le cobalt, le nickel, le magnésium, le calcium et le cadmium.

4. Substance adhésive réactionnelle selon la revendication 1 ou 2, **caractérisée en ce que** les nanoparticules de substances piézoélectriques sont choisies parmi le quartz, la tourmaline, le titanate de baryum, le sulfate de lithium, le tartrate de potassium, le tartrate de sodium, le tartrate de potassium-sodium, le tartrate d'éthylènediamine, les composés ferroélectriques à structure de perowskite ou le titanate de plomb-zirconium.

5. Substance adhésive réactionnelle selon au moins une des revendications 1 à 4, **caractérisée en ce qu'**elle contient des nanoparticules ayant une taille d'un ordre de grandeur allant de 0,02 à 5 % en poids, par rapport à la composition totale de la substance adhésive réactionnelle.

6. Substance adhésive réactionnelle selon la revendication 1, **caractérisée en ce qu'**elle contient comme résine un polymère choisi dans le groupe constitué par les époxydes, les polyisocyanates, les cyanacrylates, les méthacrylates, les polyesters insaturés, les polyvinylformals, les résines phénol-formaldéhyde, les résines urée-formaldéhyde, les résines mélamine-formaldéhyde, les résines résorcine-formaldéhyde, les polybenzimidazoles; ou les mélanges de deux ou plusieurs de ces corps.

7. Substance adhésive réactionnelle selon la revendication 1, **caractérisée en ce qu'**elle contient des durcisseurs du groupe des composés à action catalytique comme les peroxydes, l'acide chlorhydrique et/ou des composés réagissant selon le mécanisme de polyaddition, avec des fonctionnalités amino, hydroxy, époxy, isocyanate, des anhydrides d'acides carboxyliques ; ou un mélange de deux ou plusieurs de ces durcisseurs.

8. Substance adhésive réactionnelle selon la revendication 1, **caractérisée en ce qu'**elle contient au moins un additif du groupe des plastifiants, des stabilisateurs, des anti-oxydants, des colorants, des photostabilisateurs, des produits de remplissage, des pigments colorants, des parfums et des agents de conservation.

9. Substance adhésive réactionnelle selon la revendication 1, en ce que l'enveloppe des microcapsules contient au moins une substance thermoplastique du groupe des cires hydrocarbonées, des esters de cire, des cires de polyéthylène, des cires hydrocarbonées oxydées comportant des groupes hydroxyle ou carboxyle, des polyesters et des polyamides.

10. Substance adhésive selon la revendication 1, **caractérisée en ce que** l'enveloppe des microcapsules contient au moins un polymère soluble dans l'eau ou au moins dispersable dans l'eau, du groupe des polyanions naturels et/ou synthétiques.

11. Substance adhésive réactionnelle selon au moins une des revendications 1 à 10, **caractérisée en ce que** les microcapsules ont une taille particulaire moyenne de 0,1 micromètre à 800 micromètres.

12. Substance adhésive réactionnelle selon au moins une des revendications 1 à 11, **caractérisée en ce qu'**elle contient des microcapsules en une quantité de 0,2 à 20 % en poids, par rapport à la quantité totale d'adhésif réactionnel.

13. Substance adhésive réactionnelle selon au moins une des revendications 1 à 12, **caractérisée en ce que** la concentration des nanoparticules contenues comme constituant des microcapsules est de 0,05 à 20 % en poids, par rapport au poids total des microcapsules.

14. Substance adhésive réactionnelle selon au moins une des revendications 1 à 13, **caractérisée en ce que**, outre les nanoparticules, au moins un autre composant substance adhésive réactionnelle est un constituant de la microcapsule, et **en ce que** la concentration totale des composants substance adhésive réactionnelle est de 1 à 90 % en poids, par rapport à la composition totale des microcapsules.

15. Substance adhésive réactionnelle selon au moins une des revendications 1 à 13, **caractérisée en ce que** la concentration des nanoparticules contenues comme constituants des microcapsules et d'au moins un durcisseur s'établit entre 1 et 90 % en poids, par rapport à la composition totale des microcapsules.

16. Substance adhésive réactionnelle selon au moins une des revendications 1 à 15, contenant A) 50 à 95 % en poids d'au moins un prépolymère de polyuréthane à terminaison NCO,
B) 0,2 à 20 % en poids de microcapsules contenant au moins un durcisseur 1 ainsi que des nanoparticules ayant des propriétés ferromagnétiques, ferrimagnétiques, superparamagnétiques ou piézoélectriques,
C) 0 à 20 % en poids d'au moins un durcisseur II,
D) 0,05 à 30 % en poids d'additifs
par rapport à la composition totale de la substance adhésive réactionnelle, le durcisseur 1 et le durcisseur II pouvant être de nature chimique identique ou différente.

17. Substance adhésive réactionnelle selon la revendication 16, contenant :
A) au moins un polyester-polyuréthane à terminaison NCO,
B) des microcapsules contenant au moins un durcisseur à base d'une diamine aromatique ainsi que des nanoparticules ayant des propriétés ferromagnétiques, ferrimagnétiques, superparamagnétiques ou piézoélectriques, ainsi que
C) au moins un durcisseur du groupe des polyols.

18. Procédé de production d'une substance adhésive réactionnelle selon au moins une des revendications 1 à 17, **caractérisé en ce que** :
(I) on mélange des microcapsules qui contiennent le durcisseur et le cas échéant encore d'autres composants substances adhésives réactionnelles, avec la résine et le cas échéant d'autres composants substances adhésives réactionnelles, directement après la production, et
(11) on mélange les microcapsules qui contiennent le durcisseur et le cas échéant encore d'autres composants substances adhésives réactionnelles, avec la résine et le cas échéant d'autres substances adhésives réactionnelles, et ce seulement immédiatement avant l'application.

19. Utilisation d'une substance adhésive réactionnelle produite selon la revendication 18 pour la libération de composants substances adhésives réactionnelles en microencapsules, **caractérisée en ce que** l'activation de l'adhésif s'effectue après libération d'au moins un composant substance adhésive réactive en microencapsules, sous l'action de champs alternatifs électriques, magnétiques et/ou électromagnétiques, le cas échéant en combinaison avec la pression, les ultrasons et/ou la température et en présence de nanoparticules.

20. Utilisation d'une substance adhésive réactionnelle selon au moins une des revendications 1 à 17 comme adhésif pour l'enduction et la stratification.
